# EUROPEAN PATENT APPLICATION

(11) **EP 4 213 460 A1**
(43) Date of publication of application: **19.07.2023**
(21) Application number: 22188093.3
(22) Date of filing: 01.08.2022
(51) Int. Cl.: H04L 45/28, H04L 45/00

(54) **SESSION STATE SYNCHRONIZATION AND FAILOVER USING SESSION-BASED ROUTING**

(30) Priority: 17.01.2022 US 202217577340
(71) Applicant: Juniper Networks, Inc., Sunnyvale, CA 94089 (US)
(72) Inventor: MOHAN, Hemachandran Karnam, Sunnyvale, 94089 (US); BATTA, Sarvesh K., Sunnyvale, 94089 (US); MOHAMED, Abdul Kadhar Jeelany Habeeb, Sunnyvale, 94089 (US)
(74) Representative: D Young & Co LLP

(57) **Abstract**

Techniques are disclosed for management of communication sessions of network traffic between client devices and the use of an up-to-date session state to enable seamless failovers between routers. One example technique may prepare each backup router to resume sessions of the active router in event of a failover and cause a redirection of the network traffic to complete the failover to a backup router. In a hot-switchover example, a network device known as a session controller synchronizes the session state information to backup router prior to failure and then, causes the network traffic to be redirected to backup router in response to the active router failure. In a warm-switchover example, the same session controller selects a backup router dynamically after detecting failure to active router, synchronizes session state information to backup router, and trigger routing updates, causing the network traffic to be redirected to the backup router.

## Description

This application claims the benefit of US Patent Application No. 17/577,340, filed 17 January 2022.

### TECHNICAL FIELD

This disclosure generally relates to computer networks, and, more specifically, routing packets within computer networks.

### BACKGROUND

A computer network is a collection of interconnected computing devices that can exchange data and share resources. Example computing devices include routers, switches, and other Layer 2 (L2) network devices that operate within Layer 2 of the Open Systems Interconnection (OSI) reference model, i.e., the data link layer, and Layer 3 (L3) network devices that operate within Layer 3 of the OSI reference model, i.e., the network layer. Network devices within computer networks often include a control unit that provides control plane functionality for the network device and forwarding components for routing or switching data units.

The computing devices may establish a "network session" (also referred to herein as "session") to enable communication between devices on a computer network. A session may be bidirectional in that the session includes packets traveling in both directions between a first device and a second device. For example, a session includes a forward packet flow originating from a first device and destinated for a second device and a reverse packet flow originating from the second device and destined for the first device. The forward and reverse packet flows of the session are related to one another in that the source address and source port of the forward packet flow is the same as the destination address and destination port of the reverse packet flow, and the destination address and destination port of the forward packet flow is the same as the source address and source port of the reverse packet flow. To establish a session, computing devices may use one or more communication session protocols including Transmission Control Protocol (TCP), Transport Layer Security (TLS), User Datagram Protocol (UDP), Internet Control Message Protocol (ICMP), etc.

### SUMMARY

In general, the disclosure describes techniques for synchronizing session state information with a session controller using session-based routing to facilitate seamless failover in the event an active node for a communication session is lost. Each session of a plurality of sessions comprises a forward packet flow and a reverse packet flow between a source client device and a destination client device. A router (e.g., node) configured to provide session-based routing (e.g., such as Secure Vector Routing (SVR), provided by Juniper Networks Inc.) may receive an initial ("first") packet of a session and modifies only the initial packet of the session to include metadata specifying information describing a session state (e.g., 5-tuple of the initial packet and information on changes made to the packet) to signal to other routers information about the session and use the session state information to perform session-stateful routing. The router may also perform network address translation (NAT) on the header of the modified packet to secure the modified packet (which may also be included in the metadata). By using session-based routing, packets of the session may be securely communicated without the use of tunnels, thereby saving considerable network resources by obviating the need to perform encapsulation and decapsulation at tunnel endpoints.

In accordance with techniques described in this disclosure, a router leverages session-based routing to send the session state information (e.g., 5-tuple of packet and metadata) for each session to a session controller that operates as a centralized source/sink of session state information for the network such that the session controller may synchronize the session state information of a session of an active node to a backup node in order for the session to seamlessly failover to the backup node in the event of a failure to the active node. For example, using session-based routing, an active node may send session state information for a session in an initial packet of the session to a session controller. The session controller may, in response to determining that the active node has failed, select a backup node assigned to the failed active node. In response to selecting the backup node, the session controller may synchronize session state information of the failed active node to the backup node such that the backup node may have the session state information of the failed active node and resume the session.

The techniques of the disclosure may provide specific improvements to the computer-related field of computer networking that have practical applications. For example, the techniques may reduce the overhead and resources needed to synchronize session state information for failover. For example, conventional solutions synchronize session state information between pairs of routers that result in numerous exchanges of data for millions (possibly tens of millions) of sessions. Conventional solutions may implement a cleartext communication channel or a secure protocol, such as IPSEC or MACSEC, for the synchronization of session state information; however, the channel/protocol setup process may consume considerable resource capacities (e.g., processor cycles) and/or require extra header information resulting in additional overhead to synchronize session state information. Instead of synchronizing session state information between routers using the channel/protocol setup process, the session controller may leverage session-based routing mechanisms to securely synchronize session state information, which eschews the use of tunnels, thereby saving considerable network resources by obviating the need to perform encapsulation and decapsulation at tunnel endpoints. Moreover, when implementing session-based routing, only an initial "first" packet of a session includes overhead from the inclusion of the metadata, whereas the subsequent packets of the session do not. Additionally, by implementing the techniques of the disclosure, the session controller may provide support for session failover at any level of redundancy including M:N, unlike conventional solutions that are N:1 or 1:1.

In one example, this disclosure describes a method performed on processing circuitry of a session controller of a network comprising: receiving, from a first router of a plurality of routers of the network, session state information for a session between a first client device and a second client device, wherein the session state information comprises metadata specifying attributes of the session; determining the first router has failed; in response to determining the first router has failed, selecting a second router of the network as a backup router for the first router; and synchronizing the session state information for the session to the second router.

In another example, this disclosure describes a network device operating as a session controller for a network comprising: processing circuitry; and a memory comprising instructions that, when executed by the processing circuitry, cause the processing circuitry to: receive, from a first router of a plurality of routers of the network, session state information for a session between a first client device and a second client device, wherein the session state information comprises metadata specifying attributes of the session; determine the first router has failed; in response to determining the first router has failed, select a second router of the network as a backup router for the first router; synchronize the session state information for the session to the second router.

In another example, this disclosure describes a computer-readable medium comprising program instructions configured to cause processing circuitry to: receive, from a first router of a plurality of routers of the network, session state information for a session between a first client device and a second client device, wherein the session state information comprises metadata specifying attributes of the session; determine the first router has failed; in response to determining the first router has failed, select a second router of the network as a backup router for the first router; and synchronize the session state information for the session to the second router.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1 is a block diagram illustrating an example computer network system in accordance with the techniques of the disclosure.
FIG. 2 is a block diagram illustrating an example computing device in accordance with the techniques of the disclosure.
FIG. 3 is a block diagram illustrating an example implementation of the computer network system in accordance with the techniques of the disclosure.
FIG. 4 is a flowchart illustrating an example operation in accordance with the techniques of the disclosure.
FIG. 5 is a flowchart illustrating an example second operation in accordance with the techniques of the disclosure.

Like reference characters refer to like elements throughout the figures and description.

### DETAILED DESCRIPTION

The present disclosure describes a network device operating as a session controller to synchronize session state information between active and backup nodes to achieve high availability as described herein. High availability (HA) refers to an ability of a system/network to operate continuously without failing for a designated period of time and at an agreed level of operational performance (e.g., maximal uptime). To enable high availability for sessions, session state information is synchronized between an active or primary router and a backup or secondary router. In the event of active router failure, the backup router assumes responsibility of forwarding packet flows without needing to reestablish the sessions before forwarding traffic. By utilizing the session controller to propagate session state information of a failed active router to a backup router, little or no time elapses before the backup router reaches a state in which it is able to process and forward packets for the session. During this time period, none of the active sessions are queued nor lost when the active router failed.

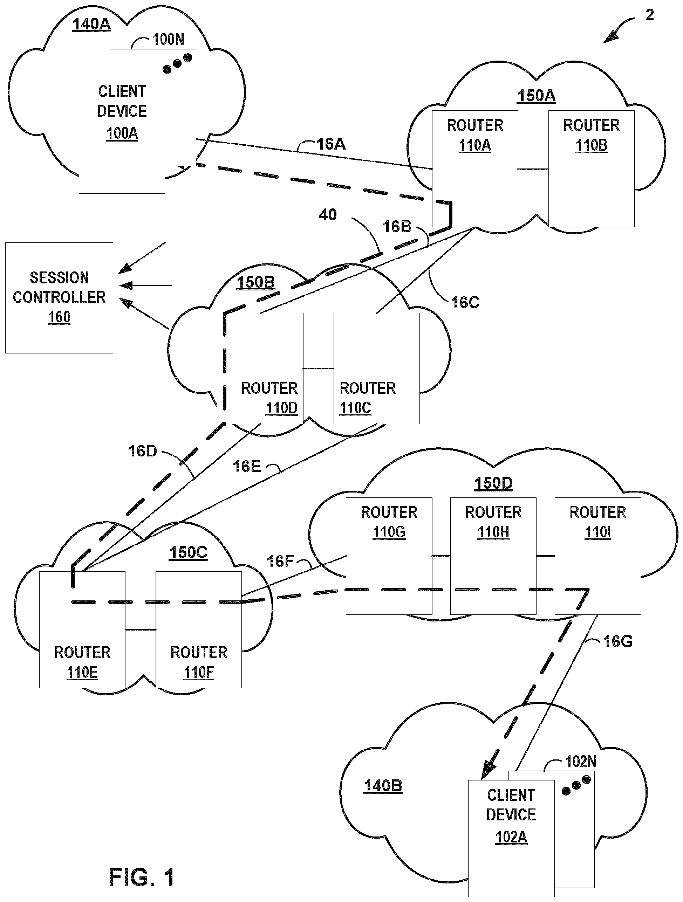

FIG. 1 is a block diagram illustrating an example computer network system 2 in accordance with the techniques of the disclosure. In the example of FIG. 1, computer network system 2 includes service provider networks 150A-150D (collectively, "service provider networks 150") configured to provide Wide Area Network (WAN) connectivity to disparate customer networks 140A-140B (collectively, "customer networks 140"). Routers 110A-110I (collectively, "routers 110") of service provider networks 150 provide client devices 100A-100N (collectively, "client devices 100") and client devices 102A-102N (collectively, "client devices 102") associated with customer networks 140 with access to service provider networks 150. In some examples, customer networks 140 are enterprise networks. Client devices 100, 102 and/or routers 110 may communicate with communication links 16A-16G (collectively, links "16"), which may be Ethernet, ATM or any other suitable network connections.

Routers 110 are illustrated as routers in the example of FIG. 1. However, techniques of the disclosure may be implemented using any network device, such as switches, routers, gateways, or other suitable network devices that may send and receive network traffic. Customer networks 140 may be networks for geographically separated sites of an enterprise, for example. Each of customer networks 140 may include additional customer equipment, such as, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other routers not depicted in FIG. 1. The configuration of computer network system 2 illustrated in FIG. 1 is merely an example. For example, computer network system 2 may include any number of customer networks 140. Nonetheless, for ease of description, only customer networks 140A-140B are illustrated in FIG. 1.

Routers 110 perform operations directing network traffic to/from devices of computer network system 2 in accordance with a routing protocol implemented by such devices. This may include a session-based routing scheme (as further described below) where routers determine a session for a packet flow and directs the packet flow according to session information. The routers may perform additional functionality, such as generating metrics for the session at least in part for each packet determined to be associated with the session. Further, for each determined session, the router determines an application associated with the session. In some examples, the router selects a network path for use in forwarding at least one packet associated with a session that is associated with an application.

Service provider networks 150 represent one or more publicly accessible computer networks that are owned and operated by one or more service providers. Although computer network system 2 is illustrated in the example of FIG. 1 as including multiple interconnected service provider networks 150, in other examples computer network system 2 may alternatively include a single service provider network that provides connectivity between customer networks 140. A service provider is usually a large telecommunications entity or corporation. Each of service provider networks 150 is usually a large L3 computer network. Each service provider network 150 is an L3 network in the sense that it natively supports L3 operations as described in the OSI model. Common L3 operations include those performed in accordance with L3 protocols, such as the Internet Protocol (IP). L3 is also known as a "network layer" in the OSI model and the term L3 may be used interchangeably with the phrase "network layer" throughout this disclosure.

Although not illustrated, each service provider network 150 may be coupled to one or more networks administered by other providers, and may thus form part of a large-scale public network infrastructure, e.g., the Internet. Consequently, customer networks 140 may be viewed as edge networks of the Internet. Each service provider network 150 may provide computing devices within customer networks 140, such as client devices 100 and 102, with access to the Internet, and may allow the computing devices within customer networks 140 to communicate with each other.

Although additional routers are not shown for ease of explanation, it should be understood that system 2 may comprise additional network and/or computing devices such as, for example, one or more additional switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other routers. Moreover, although the elements of system 2 are illustrated as being directly coupled, it should be understood that one or more additional network elements may be included along any of network links 16, such that the network elements of system 2 are not directly coupled.

Each service provider network 150 typically provides a number of residential and business services for customer networks 140, including residential and business class data services (which are often referred to as "Internet services" in that these data services permit access to the collection of publicly accessible networks referred to as the Internet), residential and business class telephone and/or voice services, and residential and business class television services.

In some examples, network service instances 104A-104N (collectively, "network service instances 104") may apply one or more network services to traffic of client devices 100, 102. Each network service instance 104 may be, e.g., a virtualized network service instantiated by a virtual machine executed by processing circuitry of a server. In some examples, network service instances 104A are a plurality of firewall instances that provide stateful firewall services to traffic of client devices 100, 102. In some examples, network service instances 104A are a plurality of deep packet inspection instances that provide deep packet inspection services to traffic of client devices 100, 102.

Session controller 160 collects session state information for network traffic of computer network system 2. In some examples, session controller 160 can use various data corresponding to communication sessions between pairs of routers 110 to provide failover of sessions in case of node failure, as further described below.

### Session-based Routing

In some examples, routers 110 may implement a stateful, session-based routing scheme that enables each router 110 to independently perform path selection and traffic engineering. The use of session-based routing may enable routers 110 to eschew the use of a centralized controller, such as a Software-Defined Networking (SDN) controller to perform path selection and traffic engineering. In this way, routers 110 may be more efficient and scalable for large networks where the use of an SDN controller would be infeasible. Furthermore, the use of session-based routing may enable routers 110 to eschew the use of tunnels, thereby saving considerable network resources by obviating the need to perform encapsulation and decapsulation at tunnel endpoints. In some examples, routers 110 implement session-based routing as Secure Vector Routing (SVR), provided by Juniper Networks, Inc.

In the example of FIG. 1, client device 100A of system 2 establishes session 40 with client device 102A. Routers 110 facilitate establishment of session 40 by transporting network traffic between client device 100A and client device 102A. In some examples, client device 100A may be considered a "source" device and client device 102A may be considered a "destination device" in that client device 100A originates session 40 between client device 100A and client device 102A, e.g., client device 100A is the "source" of a packet of a forward packet flow of the session while client device 102A is the "destination" of the packet of the forward packet flow of the session. Client device 100A may be referred to as a "source device" and client device 102A may be referred to as a "destination device" through the disclosure. Session 40 includes a forward packet flow originating from client device 100A and destined for client device 102A and a reverse packet flow originating from client device 102A and destined for client device 100A. A forward packet flow for session 40 traverses a first path including, e.g., client device 100A, one or more of routers 110A-110I, and client device 102A. As described in more detail below, routers 110 enable the exchange of traffic between customer network 140A, across service provider networks 150, to customer network 140B.

Client device 100A (e.g., a source device) may establish session 40 with client device 102A (e.g., a destination device) according to a stack of one or more L1-L4 communication protocols, including Ethernet, TCP, IP, or UDP. As described in more detail below, customer network 140A may form a first network and customer network 140B may form a second network. Routers 110 operate to extend customer network 140A across service provider networks 150 to customer network 140B. In this fashion, customer network 140A and customer network 140B may operate as if they were both part of the same network, even though customer network 140A and customer network 140B may be logically isolated and geographically separate from one another. Furthermore, routers 110 may operate such that the existence of service provider networks 150 between customer network 140A and customer network 140B is transparent to client devices 100, 102.

In some examples, routers 110 may extend session 40 across service provider networks 150 according to one or more communication session protocols, including TCP or UDP, etc. For example, to establish session 40 according to TCP such that data may be exchanged according to TCP, router 110A and router 110B perform a three-way handshake. Router 110A sends a first packet comprising a "SYN" flag to router 110B. Router 110B acknowledges receipt of the first packet by responding to router 110A with a second packet comprising a "SYN-ACK" flag. Router 110A acknowledges receipt of the second packet by responding to router 110B with a third packet comprising an "ACK" flag. After sending the third packet, session 40 is established according to TCP and routers 110A, 110B may exchange data with one another (e.g., by exchanging data packets of client device 100A and client device 102A) via session 40. Additional example information regarding TCP is described in "TRANSMISSION CONTROL PROTOCOL," Request for Comments (RFC) 793, Internet Engineering Task Force (IETF), September 1981, available at https://tools.ietf.org/html/rfc793.

UDP is a connectionless protocol in that router 110A does not verify that router 110B is capable of receiving data prior to transmitting data. To establish session 40 according to UDP, router 110A transmits a first packet to router 110B. Session 40 may be considered "established" according to UDP upon receipt by router 110A of any packet from router 110B, which implies that router 110B successfully received the first packet from router 110A, responded, and router 110A was able to receive the response from router 110B. Additional example information regarding UDP is described in "User Datagram Protocol," RFC 768, IETF, August 28, 1980, available at https://tools.ietf.org/html/rfc768.

In the example of FIG. 1, when router 110A receives a packet for the forward packet flow originating from client device 100A and destined for client device 102A, router 110A determines whether the packet belongs to a new session (e.g., is the "first" packet or "lead" packet of session 40). In some examples, router 110A determines whether information included in the first packet (e.g., a source address, source port, destination address, destination port, and protocol) matches an entry in a session table.

If no such entry exists, router 110A determines that the packet belongs to a new session and creates an entry in the session table. For example, if the packet belongs to a new session, router 110A may generate a session identifier for session 40. The session identifier may comprise a 5-tuple dataset of the original packet (e.g., a source address and source port of client device 100A, a destination address and destination port of client device 102A, and protocol of the first packet), tenant information, and/or service information. Router 110A may use the session identifier to identify subsequent packets as belonging to the same session.

In some examples, routers 110 perform stateful routing for session 40. For example, routers 110 may forward each packet of the forward packet flow of session 40 sequentially and along the same forward network path. As described herein, the "same" forward path may mean the same routers 110 that form a segment or at least a portion between a device originating the packet and a device to which the packet is destined (and not necessarily the entire network path between the device originating the packet and the device to which the packet is destined). Further, routers 110 forward each packet of the return flow of session 40 sequentially and along the same return network path. The forward network path for the forward packet flow of session 40 and the return network path of the return packet flow of session 40 may be the same path, or different paths. By ensuring that each packet of a flow is forwarded sequentially and along the same path, routers 110 maintain the state of the entire flow at each router 110, thereby enabling the use of stateful packet services, such as Deep Packet Inspection (DPI) or stateful firewall services.

In the example of FIG. 1, a stateful routing session may be established from ingress router 110A through one or more of intermediate routers 110B-110H to egress router 1101. In this example, router 110A determines that the first packet is an unmodified packet and the first packet of new session 40. Router 110A modifies the first packet to include metadata (e.g., as Type, Length, Values (TLVs) of the packet) to signal information about the session, such as a session identifier (e.g., the original source address, source port, destination address, destination port, and/or protocol of the packet received from client device 100A), information associated with changes made to packets, and/or other control parameters (e.g., tenant and/or policy information), and may be referred to herein as "session context." Router 110A may perform network address translation by replacing the header of the modified first packet to specify a next hop router. For example, router 110A may replace the header of the modified first packet to specify a source address that is an address of router 110A, a source port that is a port via which router 110A forwards the modified first packet toward client device 102A, a destination address that is an address of the next hop to which router 110A forwards the first packet (e.g., an address of router 110B), and a destination port that is a port of the next hop to which router 110A forwards the first packet (e.g., a port of router 110B). Additionally, router 110A stores the session identifier for session 40 and an indication of the selected next hop for session 40 (e.g., router 110B) such that, upon receiving subsequent packets for session 40, router 110A may identify the subsequent packets as belonging to the same session 40 and forward the subsequent packets along the same path as the first packet without modification of the subsequent packets to include the metadata.

Router 110A forwards the modified first packet to router 110B. Intermediate router 110B receives the modified first packet and determines whether the modified first packet includes metadata specifying the session identifier. In response to determining that the modified first packet includes metadata specifying the session identifier, intermediate router 110B determines that router 110B is not an ingress device such that router 110B does not attach metadata specifying the session information.

As described above with respect to router 110A, router 110B determines whether the packet belongs to a new session (e.g., is the "first" packet or "lead" packet of the session) by determining whether a source address, source port, destination address, destination port, and protocol of the first packet matches an entry in a session table. If no such entry exists, router 110B determines that the packet belongs to a new session and creates an entry in the session table. For example, if the packet belongs to a new session, router 110B generates a session identifier for the session. The session identifier used by router 110B to identify the session for the first packet may be different from the session identifier used by router 110A to identify the same session for the first packet, because each router 110A, 110B uses the header source address, source port, destination address, and destination port of the first packet to generate the session identifier, and this header information may be modified by each preceding router 110 as each router 110 forwards the first packet along the forward path. Furthermore, each router 110 may store this header information to identify a previous router 110 (or "waypoint") and a next router 110 (or "waypoint") such that each router 110 may reconstruct the same forward path and reverse path for each subsequent packet of the session.

Router 110B replaces the header of the modified first packet to specify a source address that is an address of router 110B, a source port that is a port via which router 110B forwards the modified first packet toward client device 102A, a destination address that is an address of the next hop to which router 110B forwards the first packet (e.g., an address of router 110C for session 40 along the first path), and a destination port that is a port of the next hop to which router 110B forwards the first packet (e.g., a port of router 110C). Router 110B forwards the modified first packet to router 110C. Additionally, router 110B stores the session identifier for session 40 such that, upon receiving subsequent packets for session 40, router 110B may identify subsequent packets as belonging to the same session 40 and forward the subsequent packets along the same path as the first packet.

Subsequent intermediate routers 110C-110H process the modified first packet in a similar fashion as router 110A such that routers 110 forward the subsequent packets of the session along the same path as the first packet. Further, each router 110 stores a session identifier for the session, which may include an identification of the previous router 110 along the network path as well as a next (hop) router 110. Thus, each router 110 may use the session identifier to forward packets of the packet flow for the session along the same network path.

A router 110 that may forward packets for a forward packet flow of the session to a destination for the packet flow is an egress, or "terminus" router. In the foregoing example, router 1101 is a terminus router because router 1101 may forward packets to client device 102A. Router 1101 receives the modified first packet that comprises the metadata specifying the session identifier (e.g., the original source address, source port, destination address, and destination port). Router 1101 identifies the modified first packet as destined for a service terminating at router 1101 by determining that the destination source address and destination source port specified in the metadata of the modified first packet corresponds to a destination reachable by router 1101 (e.g., client device 102A). Router 1101 recovers the original first packet by removing the metadata from the modified first packet and using the metadata to modify the header of the first packet to specify the original source address, source port, destination address, and destination port. Router 1101 forwards the recovered first packet to client device 102A. The use of session-based routing may therefore form a series of waypoints (e.g., routers 110) interconnected by path "segments" (e.g., end-to-end route vectors between each waypoint).

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; and "Secure Vector Routing (SVR)," Internet Draft, Network Working Group, IETF, October 1, 2021, available at https://datatracker.ietf.org/doc/draft-menon-svr.

### Session Controller.

In general, the disclosure describes techniques for a session controller, e.g., session controller 160, to facilitate high availability for communication sessions of network traffic between client devices. For example, session controller 160 may manage session state information of all active routers in the network.

As one example, router 110A may receive an initial packet for session 40, and in response to determining the packet belongs to a new session (e.g., by determining no entry for the session exists in its session table and creating an entry in the session table), sends the session state information (e.g., 5-tuple of the packet and metadata) to session controller 160. Router 110A uses session-based routing to send the session state information for session 40 to session controller 160 that operates as a centralized source/sink of session state information for network 2 such that session controller 160 may synchronize the session state information of session 40 of router 110A ("active router 110A" for session 40) to a backup node, such as router 110B ("backup router 110B" for session 40), in order for session 40 to seamlessly failover to the backup node in the event of a failure to the active node, router 110A. For example, using session-based routing, router 110A may send session state information for session 40 in an initial packet of the session to session controller 160, which in turn stores the session state information.

Session controller 160 may, in response to determining that active router 110A has failed, select router 110B as the backup router to active router 110A. To effectuate the switchover to router 110B, session controller 160 may change a routing policy and propagate that change to other routers (e.g., peer routers in a same cluster). Router 110B may have been pre-determined to be selected as the backup router in event of a failure of router 110A. Synchronizing the session state information for session 40 prior to the failure pre-configures router 110B to operate as the backup router for router 110A. Session controller 160 can avoid performing a post-failure synchronization of the session state information. In this manner, router 110B is prepared to resume session 40 when router 110A fails. By doing so, session controller 160 reduces to a trivial amount the delay in the switchover of session 40 to router 110B.

As an alternative to pre-configuring router 110B, session controller 160 may select router 110B as the backup router by dynamically identifying router 110B (e.g., as a best available router) upon determining that router 110A failed. In one example, session controller 160 may select router 110B upon determining that an original pre-selected backup router for router 110A also failed. This may occur if an entire cluster of routers 110 fails, prompting session controller 160 to select a backup router from a nearby cluster. In response to selecting router 110B as a new backup router for router 110A in response to a failure of the original pre-selected backup router, session controller 160 may synchronize the session state information from the failed active router, router 110A, to router 110B such that router 110B may resume session 40.

The devices/systems may be configured on the network as a network element (e.g., network device) known as a controller, such as session controller 160, which, by practicing the above-mentioned techniques, enables seamless failovers between active-backup node pairs amongst the client devices. In that controller, the hardware/software may be operative as a component configured to maintain a consistent copy of session state information for the network. In event of a failover of a client device operating as an active node, the session controller may establish another client device as a new active node and new path(s) to/from that new active node, resuming packet communications through the client device. Therefore, the present disclosure demonstrates that incorporating the techniques and the devices/systems into the network described herein may confer a number of advantages and benefits to the client devices and its users.

Session controller 160 may receive the different sets of information and update the session state information. One example embodiment for the session state information may be a data table, which is a data structure, referred to as a session control protocol table (SCP table). One or more sets of information are synchronized across the active and backup pairs of routers 110. A first set of session state information to be synchronized includes the 5-tuple in a received packet's header and/or a session identifier based on the 5-tuple. A second set of information to be synchronized include metadata for each session. The metadata may include an original 5-tuple dataset and/or an original session identifier based on the original 5-tuple. Session controller 160 may use the metadata to coalesce the session state across all routers 110 in the path between endpoints.

In some examples, the session state information to be synchronized also includes sequence numbers for packets of a session. For example, if two or more active nodes of routers 110 implement a TCP session, session controller 160 may synchronize registration status amongst respective backup nodes of the two or more active nodes of routers 110. The registration status may indicate a state of a TCP session, for example, whether the TCP session has been established or is it still waiting for an acknowledgement. The registration status may differentiate registered TCP sessions from those in which only a TCP SYN packet has arrived at that point-in-time but no TCP ACK packet has been sent. In some examples of network 2 involving session-based routing, synchronizing sequence numbers with session controller 160 may not be necessary, for instance, in case of TCP. By including the metadata used to synchronize the TCP session state, session controller 160 may determine the registration status without any TCP sequence number. If the recipient router cannot return the metadata, a TCP session has not been established with the initiating router.

An additional advantage of syncing the metadata is that when the metadata is transmitted to the above-mentioned backup nodes of the routers 110 via session controller 160, a backup node of routers 110 does not need to negotiate for that metadata in case of failover of a corresponding active node of routers 110. For example, routers 110 perform a "metadata handshake" for a new session to exchange of metadata of the new session between routers 110 (e.g., peer routers) in which each router 110 acknowledges receipt of the metadata from their counterpart router. In one example exchange, an initiating router (e.g., router 110A) includes the metadata in all packets it sends to a recipient router until it receives a reverse packet from that recipient router with the metadata and then, the recipient router proceeds to send the metadata to the initiating router until the recipient router receives a packet without metadata. The absence of metadata in the packet indicates reception of that metadata from the counterpart. By synchronizing session state information of a session of a failed active node to a backup node, the backup node no longer needs to perform a metadata handshake for the session.

Similar to routers 110, session controller 160 may synchronize recent routing and forwarding information with other network devices in network 2. In network 2, network devices such as router 110 may synchronize recent routing and forwarding information amongst each other, for example, by way of a virtual route reflector (VRR). In addition to routing and forwarding information, the virtual route reflector may facilitate distribution of traffic engineering information. In one example, session controller 160 may use the VRR to determine a best available route between two routers 110 and/or a best available router 110 to designate as a backup node for an active router 110.

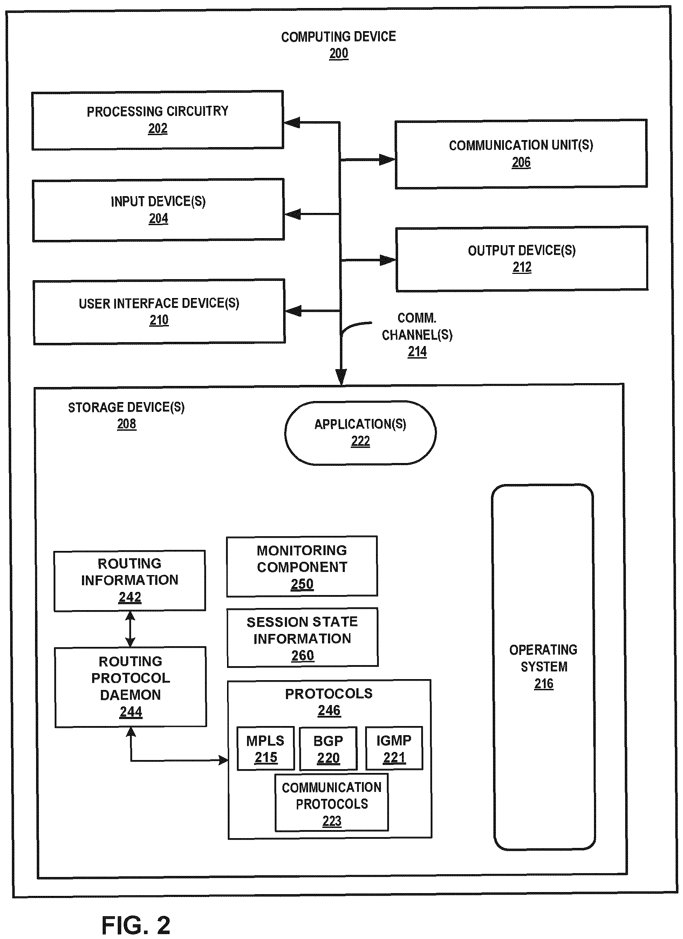

FIG. 2 is a block diagram illustrating an example computing device 200 in accordance with the techniques of the disclosure. In general, computing device 200 may be an example implementation of one of routers 110 of FIG. 1. FIG. 2 illustrates a particular example of a server or other computing device 200 that includes a variety of hardware/software components, such as processing circuitry 202 for executing various programs including any one or more of applications 222. Other examples of computing device 200 may be used in other instances.

Although shown in FIG. 2 as a stand-alone computing device 200 for purposes of example, a computing device that operates in accordance with the techniques of this disclosure may be any component or system that includes one or more processors or other suitable computing environment for executing software instructions and, for example, need not necessarily include one or more elements shown in FIG. 2 (e.g., communication units 206; and in some examples, components such as storage device(s) 208 may not be co-located or in the same chassis as other components). In some examples, computing device 200 may be implemented as a virtualized network function (VNF). In some examples, one or more aspects of computing device 200 can be run as one or more containers or as one or more applications within virtual machines of a Network Functions Virtualization (NFV) platform using, e.g., VirtIO and SRIOV network virtualization technologies, or on bare-metal servers. In some examples, computing device 200 is a physical network device, such as a switch, router, gateway, or other device that sends and receives network traffic.

As shown in the example of FIG. 2, computing device 200 includes processing circuitry 202, one or more input devices 204, one or more communication units 206, one or more output devices 212, one or more storage devices 208, and one or more user interface (UI) device(s) 210. Computing device 200, in one example, further includes one or more application(s) 222 and operating system 216 that are executable by computing device 200. Each of components 202, 204, 206, 208, 210, and 212 are coupled (physically, communicatively, and/or operatively) for inter-component communications. In some examples, communication channels 214 may include a system bus, a network connection, an inter-process communication data structure, or any other method for communicating data. As one example, components 202, 204, 206, 208, 210, and 212 may be coupled by one or more communication channels 214.

Processing circuitry 202, in one example, are configured to implement functionality and/or process instructions for execution within computing device 200. In some examples, processing circuitry 202 comprises one or more hardware-based processors. For example, processing circuitry 202 may be capable of processing instructions stored in storage device 208. Examples of processing circuitry 202 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 208 may be configured to store information within computing device 200 during operation. Storage device 208, in some examples, is described as a computer-readable storage medium. In some examples, storage device 208 is a temporary memory, meaning that a primary purpose of storage device 208 is not long-term storage. Storage device 208, in some examples, is described as a volatile memory, meaning that storage device 208 does not maintain stored contents when the computer is turned off. Examples of volatile memories include random access memories (RAM), dynamic random access memories (DRAM), static random access memories (SRAM), and other forms of volatile memories. In some examples, storage device 208 is used to store program instructions for execution by processing circuitry 202. Storage device 208, in one example, is used by software or applications running on computing device 200 to temporarily store information during program execution.

Storage devices 208, in some examples, also include one or more computer-readable storage media. Storage devices 208 may be configured to store larger amounts of information than volatile memory. Storage devices 208 may further be configured for long-term storage of information. In some examples, storage devices 208 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 200, in some examples, also includes one or more communication units 206. Computing device 200, in one example, utilizes communication units 206 to communicate with external devices via one or more networks, such as one or more wired/wireless/mobile networks. Communication units 206 may include a network interface, such as an Ethernet card, an optical transceiver, a radio frequency transceiver, or any other type of device that can send and receive information. Other examples of such network interfaces may include 3G and WiFi radios. In some examples, communication units 206 my include a plurality of high-speed network interface cards. In some examples, computing device 200 uses communication unit 206 to communicate with an external device. For example, computing device 200 uses communication unit 206 to communicate with other routers 110 and/or client devices 100 of FIG. 1 via links 16 of FIG. 1 with which communication unit 206 is connected.

Computing device 200, in one example, also includes one or more user interface devices 210. User interface devices 210, in some examples, are configured to receive input from a user through tactile, audio, or video feedback. Examples of user interface devices(s) 210 include a presence-sensitive display, a mouse, a keyboard, a voice responsive system, video camera, microphone or any other type of device for detecting a command from a user. In some examples, a presence-sensitive display includes a touch-sensitive screen. In some examples, a user such as an administrator of service provider networks 150 may enter configuration data for computing device 200.

One or more output devices 212 may also be included in computing device 200. Output device 212, in some examples, is configured to provide output to a user using tactile, audio, or video stimuli. Output device 212, in one example, includes a presence-sensitive display, a sound card, a video graphics adapter card, or any other type of device for converting a signal into an appropriate form understandable to humans or machines. Additional examples of output device 212 include a speaker, a cathode ray tube (CRT) monitor, a liquid crystal display (LCD), or any other type of device that can generate intelligible output to a user.

Computing device 200 may include operating system 216. Operating system 216, in some examples, controls the operation of components of computing device 200. For example, operating system 216, in one example, facilitates the communication of one or more applications 222 with processing circuitry 202, communication unit 206, storage device 208, input device 204, user interface devices 210, and output device 212. Applications 222 may also include program instructions and/or data that are executable by computing device 200.

As described herein, computing device 200 may operate in a network of network devices. Routers are examples of network devices and operate routing components or routing engines to operate in accordance with a routing protocol. Computing device 200 may generate routing information 242 and use Routing Protocol Daemon (RPD) 244 and protocol(s) 246 to manage its consistency within the network similar to a router.

RPD 244 may execute software instructions to implement one or more of protocol(s) 246, which may include a routing protocol, that, when controlled by RPD 244, may combine to operate as a routing component of a network device, such as the above-mentioned router. In some examples, protocol(s) 246 may be referred to as control plane networking protocol(s). For example, protocol(s) 246 may include Internet Group Management Protocol (IGMP) 221 and/or Border Gateway Protocol (BGP) 220 for exchanging routing information with other routing devices and for updating routing information base (RIB) 252, Multiprotocol Label Switching (MPLS) protocol 215, and other routing protocols. Protocols 246 may further include one or more communication session protocols, such as TCP, UDP, TLS, or ICMP.

Protocols 246 may further include one or more network monitoring protocols, such as Bidirectional Forwarding Detection (BFD) or Real-Time Performance Monitoring (RPM), for tracking and monitoring session traffic across the above-mentioned network, for example, by generating information indicative of failures in one or more network devices. When computing device 200 operates a session controller for the network, monitoring component 250 may determine, from the generated information, which router failed and which backup router to failover at least one session from the failed router. As described herein for some examples, in response to detecting the failed router, monitoring component 250 may perform a session state synchronization and trigger routing updates (e.g., amongst peer routers) to activate the backup router for session communications.

Each route defines a path between two locations on the network. The routing protocol generally define which routers to relay packet flows through the network along the path and, more particularly to relay the packet flows to a next hop. In reference to forwarding a packet, the "next hop" from a router typically refers to a neighboring device along a given route. Upon receiving an incoming packet, the router examines information within the packet to identify the destination for the packet. Based on the destination, the router forwards the packet in accordance with the forwarding information. When two routers initially connect, the routers exchange routing information to generate up-to-date forwarding information and then, continue to communicate via the routing protocol to incrementally update routing information 242 and, in turn, update their forwarding information in accordance with changes to a topology of the network indicated in the updated routing information. For example, the routers may send update messages to advertise newly available routes or routes that are no longer available.

In some networks, network devices including routers and/or session controllers maintain peer routing sessions and exchange messages conveying routing information in accordance with a routing protocol. These messages may advertise new routes and, in some examples, alternative routes to redirect traffic from a failed router. Distribution of these messages in accordance with the routing protocol may effectuate a failover to a backup router, for instance, in response to determining a router that failed. Computing device 200 may be configured to trigger the distribution of these messages as routing updates after determining that the router has failed.

Computing device 200 may communicate messages to advertise and withdraw routes for reaching destinations within network 2. In the event of a network topology change, such as link failure or failure of one of routers, computing device 200 may communicate routing messages (e.g., route advertisements) informing other network devices of affected routes. In response to the routing messages, the other network devices select new routes for reaching destinations within the network for sessions flowing through them. Similar to the routers, computing device 200 may update routing information 242 with the new routing information reflecting the selection of the new routes in the backup routers. Any of the routers (e.g., independently) detecting the change may issue routing messages (e.g., route advertisements) informing the other routers (e.g., peer routers) of the affected routes. These routing messages may originate with computing device 200 or may be based on a failover policy of session metadata.

In some examples, computing device 200 may be configured to operate as a session controller (e.g., session controller 160 of FIG. 1) in a network. Computing device 200 may include monitoring component 250 to perform various functionality for the session controller. In one example, other network devices of the network, such as routers, generate a session identifier for each new session and stores the session identifier in local session data. An active router may thereafter use the session identifier(s) stored in the local session data to identify subsequent packets as belonging to a same session. The active router may transmit to computing device 200 each update to the local session data for monitoring component 250 to proceed with modifying session state information 260 and then, synchronizing/sending the modified session state information 260 to one or more backup routers. Having the updated local session data allows the backup router(s) to maintain a (replicated) session state for one or more sessions at the active router.

Session state information 260 stores information for identifying sessions and determine their respective session state. In some examples, session state information 260 is in the form of a session control table. For example, session state information 260 comprises one or more entries that specify a session identifier and session metadata. In some examples, the session identifier maps to a connection between two routers in which one is a previous router and another is a current router in a packet flow. The session identifier may correspond to a 5-tuple dataset comprising attributes of header information including an address and a port of the previous router, an address and a port of the current router, and a protocol. In some examples, the session metadata maps a path between two client devices and involving multiple routers including the previous router and the current router. The session metadata may correspond to one or more of a source address, source port, destination address, destination port, or protocol associated with a forward packet flow and/or a reverse packet flow of the session.

In response to determining that a first router failed and cannot operate as the active router, monitoring component 250 selects a second router as the backup router. In a hot-switchover example, monitoring component 250 uses session state information 260 to synchronize a session state with the second router prior to determining that the first router failed. Monitoring component 250 may then cause traffic to be redirected to backup router in the event of active router failure. In a warm-switchover example, monitoring component 250 selects a new backup router dynamically after detecting failure to the active router. Monitoring component 250 synchronizes session state information 260 to the new backup router and then, causes all or some session traffic to be redirected traffic to new backup router in response to determining the active node failure.

For example, session state information 260 comprises one or more entries that each specify session state information for a specific router in network 2. Session state information 260 may be arranged according to a database system in which a "session context" may be configured as an index for identifying each entry of the one or more entries. The "session context" may refer to a combination of attributes describing the session at the specific router and may include the session identifier and the session metadata. The session metadata ensure a forward path and/or a reverse path through the same respective sequences of routers. This allows computing device 200 to identify an entire forward path or reverse path of the session throughout the network and trace each packet flow through a sequence of routers where each router may compute an individual session identifier for the same session. Hence, a session state may refer to a most recent "session context" may include an identifier for a certain hop in a forward path or a reverse path of a session and metadata for path identification of the session. Both may be generated by a routing component configured to implement a routing protocol.

For each entry, an example dataset of session state information includes the above session context and a number of other attributes. For instance, an attribute may be a set of information comprising a source address, source port, destination address, destination port, and a protocol (e.g., the routing protocol). The 5-tuple dataset described herein may be used as the set of information. As an option, some dataset attributes identify a session associated with a service, an application, a specific router, a forward path or a reverse path of the certain session.

As described herein, each session associated with packets received by a network device possesses metadata (i.e., session metadata) generated by the network device allowing consistency in path identification. For example, a TLS session to a server using port 443 may include metadata attached to an associated packet indicating an SNI learned from a client certificate and a hostname. The hostname in the metadata may matches a hostname based on DNS. The TLS session may further be classified as HTTPS based on a port number associated with the session. Another example of the session metadata may be session numbers and other registration data.

Additionally, the metadata identifies, based on a service (e.g., application service) associated with the packet, one or more policies including a path failover policy, a routing policy, and/or the like for network traffic associated with the session. The network device applies, to each incoming packet, a failover policy that corresponds to the session associated with the packet. As directed under that failover policy (and/or the routing policy), the network device may perform a warm-switchover of a failed router to any backup router (e.g., as a next hop or next router in the forward path or the reverse path) after pre-configuring/pre-determining a network device as that backup router, for example, by sending/synchronizing session state information 260 with the pre-configured/pre-determined network device. In another policy, the network device may perform a hot-switchover to a backup router after a failure, for example, by sending/synchronizing session state information 260 with a network device after the failure.

In some examples, a router (or another network device) may download and/or upload various data (e.g., by way of a query/request, a query/request response, or an application/service function) to computer 200 with one or more attributes of the session context associated with a received packet. For example, the router may determine a new session and a role as an intermediate router based on a correspondence of a source address, source port, destination address, destination port, or protocol of the router to a source address, source port, destination address, destination port, or protocol specified by packet metadata. The router may compute a new session identifier from the 5-tuple dataset and submit that new session identifier in automated communications of message data. This may be done (automatically) by a routing component, which is programmed according to the routing protocol, to communicate the message data, for example, in a submission of the metadata and/or other session state information. In another example, the routing component may communicate the message data in response to a query/request from computing device 200. The routing component may transmit the message data formatted according to any one of a variety of message types. In one example, a JSON document to computer device 200 for analysis. In some examples, the routing component transmits, for each session, a different JSON document comprising one or more datasets of session state information. In turn, monitoring component 250 collects the session state updates for each session of the plurality of sessions in a JSON document, before converting the JSON document into another format (e.g., such as a format derived from JSON) for transmission to another network element, such as a pre-configured backup router.

Routing information 242 exchanged by network devices in large networks may take a long period of time to converge to a stable state after a network fault due to temporary oscillations, i.e., changes that occur within the routing information until it converges to reflect the current network topology. These oscillations within routing information 242 are often referred to as "flaps," and can cause significant problems, including intermittent loss of network connectivity and increased packet loss and latency. Monitoring component 250 may determine, based on session state information 260, when routing information 242 converges on a state.

To facilitate the convergence, monitoring component 250 may access metadata for the session from one or more sources, depending on which routing protocol(s) 246 affect the packet flows. In SVR, a mechanism referred to as a metadata handshake is configured to ensure the session metadata is received and processed between network devices (e.g., peers). A router that supports SVR paths (e.g., peer paths) inserts the session metadata for each packet flow into a first packet but not in any subsequent packet. The session metadata may include an original or global session identifier that each router extracts from the first packet. The session controller may use the global session identifier in coalescing the session data corresponding the individual session identifiers and converge the session state information 260. As such, non-stop routing and graceful switchover may be enabled.

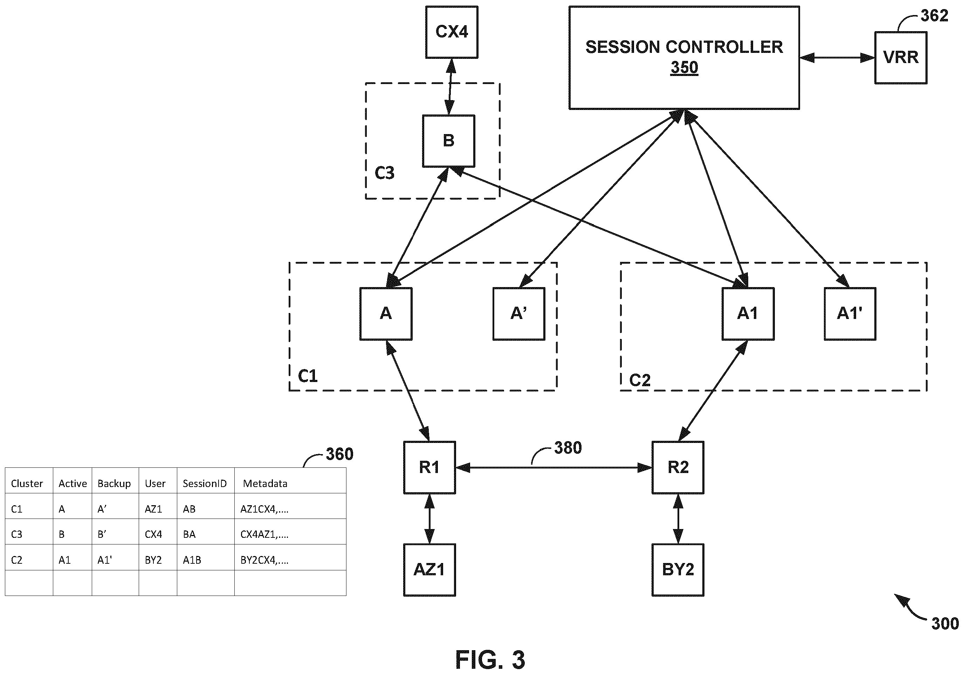

FIG. 3 is a block diagram illustrating an example implementation of computer network system 300 in accordance with the techniques of the disclosure.

In the example illustrated in FIG. 3, computer network system 300 includes a number of a network devices (referred to as routers) that are arranged into a suitable topology: A portion of computer network system 300 includes endpoint user devices AZ1, BY2, and CX4; peer routers R1 and R2 for endpoint user devices AZ1 and BY2; routers A and A' belonging to a same cluster, C1; routers A1 and A1' belonging to a same cluster, C2; and routers B and B' (not illustrated) belonging to a same cluster, C3. Session controller 350 selects routers A, A1, and B as active routers and configures routers A', A1', and B' as their respective backup routers in active-backup router pairs for the computer network system. Session controller 350 manages (e.g., consistency of) information describing stateful sessions of active nodes by maintaining a copy of relevant data belonging to each of these nodes stored in table 360. In response to determining that a router of the computer network system failed, session controller 350 updates routing information in peer routers of failed router and peer routers of backup router such that traffic is directed to the backup router.

Table 360 includes datasets of session state information for a specific session, each dataset specifying attributes of an active router for session traffic in computer network system 300, including attributes identifying a cluster of an active router for session traffic, a backup router (if pre-determined), user information, a session identifier, session metadata, and/or other data corresponding to a current session state. Table 360 may store, in a session metadata column, path information (e.g., a 5-tuple dataset for a forward path or a reverse path) and other details for routing session traffic. It should be noted that table 360 may configure the session metadata column to store any number of policies in the session metadata column, including a security policy (e.g., an encryption scheme and other cypher details), a failover policy, and so forth. Table 360 may include a column to indicate a session identifier for a specific portion (e.g., a segment) of the path for the session. The session identifier is unique to the node(s) that forwarded a packet flow to a next hop. Combining the session identifier with the 5-tuple dataset in the session metadata to form an index for table 360 allows session controller 350 to trace the path determined by a routing protocol for the session traffic according to one example. In some examples, the backup router is determined in response to detecting a failure (as opposed to being preconfigured), and may not be included in table 360.

In different examples of table 360, the session state information includes suitable attributes for a routing protocol. For 128T routers, the metadata may include: (1) 5-tuple information of which one will be a session identifier.

In the event of a failure at a router, session controller 350 selects a backup router to switchover/failover from a failed router and resumes session(s) at the backup router. Session controller 350 detects the failure of each session, i.e., the session "goes down" and one of the routers of the session caused the failure, session controller 350 may propagate, throughout the network, routing messages indicating one or more alternative routes to avoid the failed router and continue forwarding packet flows for the session(s).

Session controller 350 may cause one or more routers to update their internal routing and forwarding information to reflect the failure, perform route resolution based on the updated routing and forwarding information to select a suitable one of the one or more alternative routes, update its forwarding information based on the selected routes, and send one or more update messages to inform other routers of the routes that are no longer available and the alternative route avoids a failed router. In turn, the other routers update their internal routing and forwarding information, and send update messages to their peers. This process continues and the update information propagates outward until it reaches all of the routers within the network. As an alternative, session controller 350 may cause VRR 362 to trigger the updates to the routing and forwarding information at the one or more routers such that a router may be configured to forward session traffic through a newly identified backup router as directed by the one or more alternative routes.

Session controller 350 may synchronize a portion (e.g., a subset) of the session state information stored in table 360 with one or more routers prior to or in response to determining that a router failed. Session controller 350 may pre-configure the one or more routers as selectable backup router(s) in response to determining that a router failed. In another example, the one or more routers may be pre-determined to be selected as backup router(s) in response to determining that a router failed. Session controller 350 may select the one or more routers in response to determining that a router failed and then, send/synchronize the session state information to the one or more routers.

To illustrate by way of an example, session controller 350 may store, in table 360, the session state information for session(s) at router A, which includes, for example, the cluster of router A (e.g., "C1'), backup node for router A (e.g., router A'), the user endpoint device initiating the session traffic (e.g., "AZ1"), the (e.g., segment) identifier at router A for the session (e.g., AB), metadata specifying the path information for the session (e.g., "AZ1CX4"). In this example, the path information includes "AZ1CX4" to represent an original 5-tuple dataset for the session. The original 5-tuple dataset is used in a packet flow sent by the endpoint user device AZ1 to an ingress router. In the example illustrated in FIG. 3, table 360 may store other attributes in the metadata (column), such as NAT information and/or the like. The original 5-tuple dataset represented by "AZ1CX4" references a forward path of the session; in the session metadata column for router B, table 360 provides "CX4AZ1" to represent an original 5-tuple dataset for referencing the corresponding reverse path. As a node on the reverse path, router B in cluster C3 is operative to forward data from the destination endpoint device "CX4" to router A for eventual delivery to the source endpoint user device AZ1.

Session controller 350 may synchronize session state information to router A', the backup router of router A, in accordance with table 360 as depicted in FIG. 3. Router A' is configured to maintain a copy of a respective session state for a number of sessions in preparation of failover. Upon detecting failure at router A, session controller 350 may, with a trivial latency, allow session traffic of router A to continue via router A' instead. For an example session between endpoint user devices AZ1 and CX4, given that router A' may be pre-configured with session state information and/or pre-determined to be selected as the backup router if router A fails, session controller 350 may synchronize all of router A's session state information to backup router A' prior to determining that router A failed. Session controller 350 may trigger routing information updates at other routers indicated in the path information (e.g., reverse path or forward path) of the session. The other routers may be peer routers for router A, such as router R1 and router B, and peer routers for router A', which may be the same as the peer routers for router A.

There are a number of techniques in which session controller 350 triggers routing updates to include new/alternative routes of a session. Generally, a new/alternative route includes a backup router, for example, as part (e.g., a waypoint or a link) in a forward path or a reverse path of the session to effectuate a redirection of session traffic to a destination, user endpoint device CX4, while avoiding a previously/currently active router or a currently offline/failed router. In one example, routers other than routers A and A' may modify an information base of routing and forwarding information such that the new/alternative routes include the backup router, router A', as a new active router to resume at least one session of the failed router, router A. In any given router where router A is a next hop for packets of the session, this example router may update the routing and forwarding information to indicate the backup router, router A', as a new next hop, replace the routing and forwarding information indicating router A as a next hop for the session, and then, proceed to generate attributes of future packet headers with an address and a port of router A'. If router A' is not a peer for the example router, the example router cannot use router A' as the new next hop for the session in which case the router removes the routing and forwarding information indicating router A as the previous next hop. In the example router is a next hop for router A along a path, the example router may update the routing and forwarding information to replace router A with the backup router, router A', in local session data, and then, compute a new session identifier based on new header information. If router A' is not a peer for the router, the router cannot be forwarded a packet for the session from router A' in which case the router removes the routing and forwarding information indicating router A as a previous intermediate router of the path.

There are a number of ways for router A' to handle a failover from router A. In one example, router A' can resume the example session by starting a new session with previous session state information, followed by a convergence of session state information at session controller 350. During the convergence, session controller 350 may receive message data from routers indicating their incorporation of new session information and new routing information. In another example, if router A' is a pre-determined/pre-configured backup router for active router A, router A' may be aware of current sessions that are present in router A, for example, by way of (e.g., periodic) synchronization of the session state information in table 360. When the above example session moves from router A, router A' is not limited to resuming the example session from the beginning; instead, router A' may resume the example session from where the session state last left off upon the node failure at router A. After the transition of the session, router A' may seamlessly continue traffic for that example session. Receiving the message data may prompt session controller 350 to add new session state information to table 360 to replace previous session state information and/or update the previous session state information in table 360 to reflect an up-to-date session state for the example session.

Session controller 350 is not restricted to a same or different cluster when selecting a backup router for (e.g., failed) router A. In some examples, router A1 can operate as a backup router for resuming one or more sessions from router A. For example, network traffic for the session between endpoint user devices AZ1 and CX4 may be migrated from router A of cluster C1 to router A1 of cluster C2 by way of connection 380 (e.g., an MPLS connection) between routers R1 and R2. In table 360, session controller 350 modifies a corresponding entry for router A to replace that router's identifier with router A1's identifier such that router A1' remains a backup router for any session(s) at router A1 and continues to receive information indicating updates to the session state. In response to a failure at router A, the session between endpoint user devices AZ1 and CX4 can be resumed at router A1. In response to a subsequent failure at router A1, the above session and the session between endpoint user devices BY2 and CX4 can be resumed at router A1'.

It should be noted that in the above description, any router may be selected as a backup router for various reasons. Given that router A1' is in cluster C2 and is included in a shortest path, router A1' may remain a backup router for the session between endpoint user devices BY2 and CX4 over router A1. In another example, router A1' may be selected as a backup router for the session between user BY2 and CX4 since router A1' retains session state information prior to session migration. If router A1' is unavailable for some reason, session controller 350 selects an alternate backup router, such as router A. Therefore, in response to the failure at router A, the session can be resumed at router A or router A1'.

It is possible for router A to failover to a router in another cluster in computer network system 300, according to other examples. A number of metrics regarding the routers of the computer network system may be used to select a suitable router.

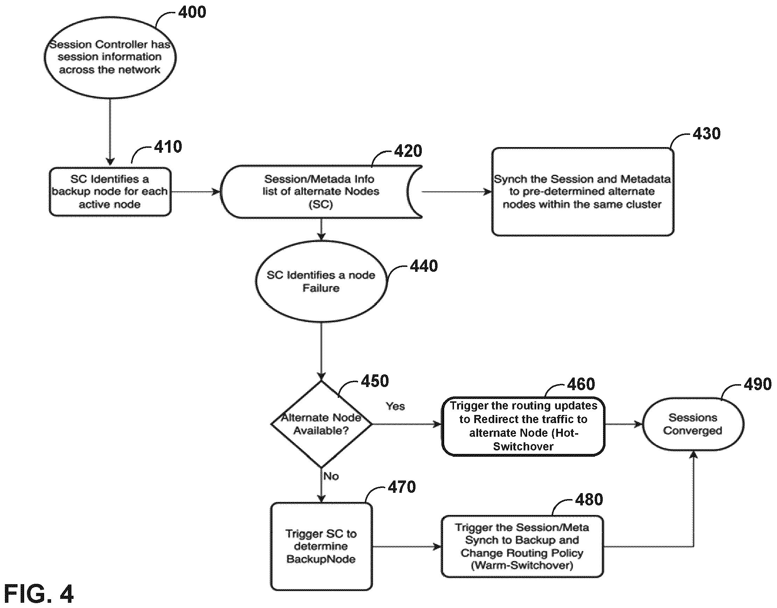

FIG. 4 is a flowchart illustrating an example operation in accordance with the techniques of the disclosure. FIG. 4 is described with respect to FIGS. 1 and 2 for convenience.

As depicted in the example of FIG. 4, session controller 160 has session information (e.g., session state information 260 of FIG. 2) for routers across a network (400). Session controller stores the session information in a table and when a session state change, updates the table to include new session information. The session state recorded in the table may indicate a forward path or a reverse path of a session. Session controller 160 may use the session information to identify a backup router for each active router of a forward path or a reverse path of the session (410). Session controller 160 may combine each identified backup router to assemble a list of alternate nodes that are pre-selected as backup routers for the network. It should be noted that while FIG. 4 uses "alternate node" in reference to the "backup router" described above, the present disclosure describes the "backup router" as being interchangeable with the "alternate node." Session controller 160 may extract session/metadata information for the list of alternate nodes (420) and synchronize the session/metadata information to each alternate node within a same cluster as the intended active router (430).

Session controller 160 may identify a node failure of one of the active routers in the network (440). For example, session controller 160 may use Bidirectional Forwarding Detection (BFD), Real-Time Performance Monitoring (RTP), or other protocols to monitor the status of the active routers throughout the network. In response to detecting the node failure, session controller 160 checks for alternate node(s) to use as the backup router, for example, by performing a lookup of a table (e.g., table 360 of FIG. 3) storing session/metadata information and a list of alternate node(s) (450).

In some examples, the alternate node(s) are pre-determined (e.g., pre-configured), and session controller 160 may synchronize the session state information of the active router to the alternate node(s) prior to failure. In this way, session controller 160 may, in response to determining that there is at least one pre-determined alternate node that is available as a backup router (YES of 450) perform a failover of at least one session from the failed active router by triggering routing updates to redirect network traffic to the alternate node (hot-switchover) (460).

Based on a determination that none of the available routers in the network is a pre-determined alternate node for the failed active router (NO of 450), the session controller may trigger a search for a suitable backup node (470). Upon completing the search and identifying the suitable backup node for the failed node, the session controller 160 may synchronize the session state information to the backup node and update a routing policy to redirect traffic to the backup node (warm-switchover) (480). In some examples, session controller 160 may select a backup router from a list of alternate node(s) that are dynamically identified upon determining that the active router failed. The list of dynamically identified alternate nodes are not pre-determined (e.g., not already specified in table 360) prior to the node failure and may be compiled upon determining that each pre-configured alternate node also failed. To complete the failover, the session controller converges active sessions of the session state information (490).

To maintain a consistent session state at the nodes throughout the network, the session controller may execute processes for the session state synchronization continuously or at specific points-in-time throughout network operation. In one example, the session controller maintains an up-to-date copy of session state information and (e.g., periodically) distributes (e.g., via a L2 connection) recent changes (since a previous distribution) to other routers to enable those routers to assume their role as the backup router in case of failover.

In one example, the session controller ensures routers of a same cluster within the network have a consistent session state by synchronizing corresponding datasets of session context and route metadata to routers that are pre-determined alternate nodes within the same cluster (490). In one example, the session controller may synchronize the context data and the metadata with other routers of the same cluster.

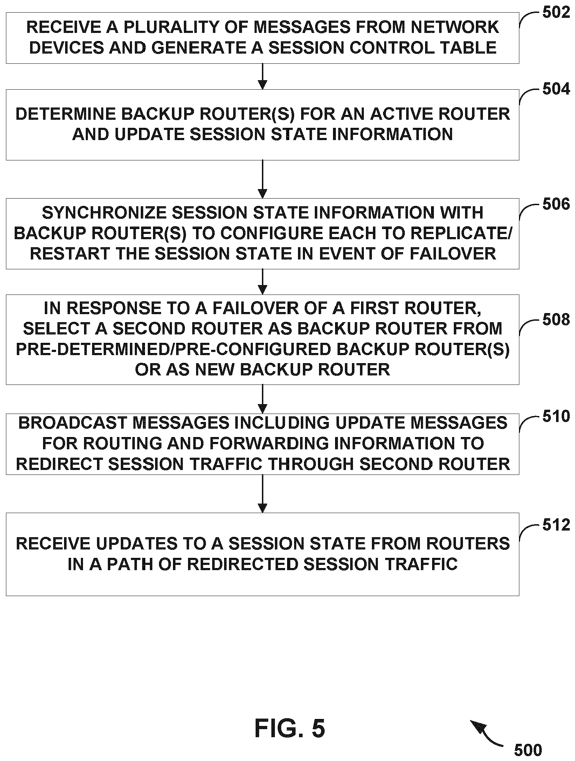

FIG. 5 is a flowchart illustrating an example second operation in accordance with the techniques of the disclosure. FIG. 5 is described with respect to FIGS. 1 and 2 for convenience. In this example, computing device 200 may perform the second operation in its entirety or as part of medical system 2 in which one or more routers 110 and session controller 160 are components.

As illustrated in FIG.5, computing device 200, operating as a session controller described herein, may perform a method providing high-availability in network 2 by performing seamless failovers. Computing device 200 may commence method 500 upon receiving a plurality of messages from network devices in network 2 and generate a session control table having session state information 260 (502). In one example, processing circuitry of computing device 200 executes logic (e.g., program code) operative to generate the session state information for each session of packet flows in the network. The network devices of network 2 include a plurality of routers and a plurality of client devices as well as computing device 200 as an example embodiment of session controller 160 of FIG. 1.

Computing device 200 may continue method 500 by determining backup router(s) for an active router and updating the session state information (504). This selection may be made prior to any failover or, alternatively, upon detecting a failover. Prior to the failover, computing device 200 may select the second router as a backup for the first router based on a number of metrics.

As described herein, one or more backup routers of routers 110 provide non-stop routing after a failover (e.g., a graceful switchover) from a primary router operating on one of routers 110 using replicated session metadata and header information. That is, data for sockets associated with the communication sessions via the primary router is transparently replicated to session controller 160 (and, in some cases, the backup node) in real-time. The secondary routing engine constructs and maintains backup sockets so as to mimic the (connected) sockets currently used by the primary node when communicating with the other network devices.

Computing device 200 may proceed to synchronize the session state information with backup router(s) to configure each to replicate/restart the session state in event of failover (506). In response to receiving, from the first router, an update to the session state information, synchronizing that update with the session state information at the second router to maintain, as consistent, the up-to-date session state. In some examples, computing device 200 may communicate, to the second router, message data comprising an updated session state for the first router that the second router may use the updated session state to maintain consistency of the session state information comprising the up-to-date session state for the first router. Computing device 200 may communicate message data comprising a session context (e.g., session identifier and metadata) for a new session at the first router that the second router uses the session context to add an entry for the new session to session state information comprising the up-to-date session state for the first router.

The session context of the new session comprises metadata of a first packet and an identifier for the first router of the forward path or the reverse path of the new session. The metadata of the first packet of the new session comprises Secure Vector Routing (SVR) metadata. The metadata of the first packet of the new session may include an address and a port of the first client device, an address and a port of the second client device, and a routing protocol. The identifier for the first router of the forward path or the reverse path of the new session may include a 5-tuple dataset comprising an address and a port of a previous network device, an address and a port of a next network device, and a routing protocol.

In response to a failover at a first router of the network, computing device 200 selects a second router as the backup router for the first router (508). Computing device 200 may select the second router from the pre-determined/pre-configured backup router(s). In another example, computing device 200 may select the second router as a new backup router instead of any of the pre-determined/pre-configured backup router(s). Computing device may modify the session state information to remove the first router and insert a second router in each entry identifying the first router in a forward path or in a reverse path of a session between a first client device and a second client device.

Computing device 200 may execute logic comprising monitoring component 250 to configure the second router to resume the session based on an up-to-date session state of the first router. The up-to-date session state of the first router may include one or more sets of information, wherein a first set of information comprises session metadata for the forward path and/or the reverse path, wherein a second set of information comprises a session identifier for a session table at the first router, wherein a third set of information comprises sequence number for a last acknowledged packet.

The second router may generate the up-to-date session state based on the session state information received from the session controller prior to the failover or responsive to the failover. The second router generates the up-to-date session state from the session state information provided from the session controller. As result, other routers (e.g., peer routers) may route a packet flow of the forward path or the reverse path through the second router. Computing device 200 may communicate message data instructing the second router to resume the session based on the modified session state information or the session state information prior to any failover.

Computing device 200 may broadcast messages of updated routing and forwarding information to redirect traffic through the second router (510). In some examples, computing device 200 communicates, to at least one peer router of at least one of the first router or the second router, message data indicative of an alternative route, via the second router, in the forward path or the reverse path between the first client device and the second client device. In some examples, computing device 200 communicates, to each peer router in the forward path or the reverse path of the session, message data instructing a routing component of that peer router to update routing and forwarding information. Updating the routing and forwarding information causes a redirection of a packet flow of the session, by the routing component, to the second router. As an example, routers may propagate, amongst themselves, an update to routing and forwarding information amongst routers of a same cluster. The update may include an address and a port of the second router for replacing an address and a port of the first router in any entry corresponding to a route via the first router or for adding an entry corresponding to a new route via the second router.

Computing device 200 may receive updates to a session state for each of a number of sessions (512). These updates may be messages from routers in a path of redirected session traffic. As a packet flow of a session proceeds through these routers, the corresponding session state may modify to enable path identification.

To facilitate the convergence, computing device 200 may access metadata for the session from one or more sources, depending on which routing protocol(s) 246 affect the packet flows. In SVR, a mechanism referred to as a metadata handshake is configured to ensure the session metadata is received and processed between network devices (e.g., peers). A router that supports SVR paths (e.g., peer paths) inserts the session metadata for each packet flow into a first packet but not in any subsequent packet. The session metadata may include an original or global session identifier that each router extracts from the first packet. The session controller may use the global session identifier in coalescing the session data corresponding the individual session identifiers and converge the session state information 260. As such, non-stop routing and graceful switchover may be enabled.

The above-mentioned global session identifier of the session metadata may represent an original "5-tuple" of an IP packet, including source IP, source port, destination IP, destination port, and protocol. Optionally, the 5-tuple dataset may be extended to include one or more additional attributes. Examples of additional attributes include Layer 2 information such as MAC Address or VLAN tags.

Secure Vectors contain application layer metadata used for authentication and communicating network intent between data routers. The metadata is extensible, and could be used to transmit information including routing and forwarding information, security policies, and quality policies securely across network boundaries. A Secure Vector Route (SVR) describes a network intent related to a particular session and shares this intent in the form of metadata with a routing peer. The intent to a peer router is conveyed by means of a cookie, often referred to as first packet metadata, which is placed on the first packet that is targeted towards the peer. Secure Vector Routes are session aware on every router and set up a bi-flow (forward and reverse flows) based on the intent. Once the session is set up, the cookie is not sent for the subsequent packets. The metadata must be inserted into existing packets directly after the L4 header, even if the resulting increase in packet size would cause the packet to require fragmentation. The metadata must be in the very first packet of a new session (TCP or UDP bidirectional flow) to have any role in path selection or security. Metadata may be sent in any subsequent packet to change/update the networking intent. The metadata is inserted into the payload portion of a packet to guarantee it makes it unchanged through the network. Packet lengths and checksums must be adjusted accordingly, although adjusting TCP sequence numbers is not necessary.

SVR Peers may have many different possible paths between them. Each path must be discovered, and its service state should be known prior to sending metadata. Techniques such as BFD (RFC 5580) could be used to determine path availability. Each of these individual paths between peers is called a "peer path." Secure Vector routes are always defined and used between peers and can support session resiliency across multiple paths.

The order and flow of the operation illustrated in FIGS. 4 and 5 are examples. In other examples according to this disclosure, more or fewer types of session state information may be considered. Further, in some examples, processing circuitry may perform or not perform the methods of any device, the operations of FIG. 4 and FIG. 5, or any of the techniques described herein, as directed by a user, e.g., via computing device 200. For example, a user of a client device or an administrator a network may turn on or off functionality for a routing protocol (e.g., using Wi-Fi or cellular services) or locally (e.g., using an application provided on a computing device or using an external controller).

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions, or transient media such as carrier signals, carrier waves and transmission media. Instructions embedded or encoded in a computer-readable medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media. A computer-readable storage medium is defined herein as a non-transitory memory device.

The invention is defined in the appended claims.

Thus, from at least one perspective, there has now been described techniques for management of communication sessions of network traffic between client devices and the use of an up-to-date session state to enable seamless failovers between routers. One example technique may prepare each backup router to resume sessions of the active router in event of a failover and cause a redirection of the network traffic to complete the failover to a backup router. In a hot-switchover example, a network device known as a session controller synchronizes the session state information to backup router prior to failure and then, causes the network traffic to be redirected to backup router in response to the active router failure. In a warm-switchover example, the same session controller selects a backup router dynamically after detecting failure to active router, synchronizes session state information to backup router, and trigger routing updates, causing the network traffic to be redirected to the backup router.

Further examples of feature combinations taught by the present disclosure are set out in the following numbered clauses:
1. A method performed on processing circuitry of a session controller of a network comprising:
   receiving, from a first router of a plurality of routers of the network, session state information for a session between a first client device and a second client device, wherein the session state information comprises metadata specifying attributes of the session;
   determining the first router has failed;
   in response to determining the first router has failed, selecting a second router of the network as a backup router for the first router; and
   synchronizing the session state information for the session to the second router.
2. The method of clause 1, wherein the session state information includes a session identifier.
3. The method of clause 2, wherein the session identifier corresponds to a 5-tuple dataset comprising an address and a port of a previous network device, an address and a port of a next network device, and a routing protocol.
4. The method of any of clauses 1-3, wherein selecting the second router of the network as the backup router for the first router further comprises:
   pre-configuring the second router as the backup router for the first router prior to determining the first router has failed; and
   in response to determining the first router has failed, triggering routing updates to redirect traffic to the second router.
5. The method of clause 4, wherein pre-configuring the second router as the backup router further comprises:
   synchronizing the session state information to the backup router prior to determining the first router has failed.
6. The method of any of clauses 1-5, wherein selecting the second router of the network as the backup router for the first router further comprises:
   in response to determining the first router has failed, synchronizing the session state information to the second router; and
   triggering routing updates to redirect traffic to the second router.
7. The method of any of clauses 1-6, wherein selecting the second router of the network as the backup router for the first router further comprises:
   selecting the second router as the backup for the first router based on a number of metrics.
8. The method of any of clauses 1-7, wherein one or more of the attributes of the metadata comprise an address and a port of the first client device, an address and a port of the second client device, and a routing protocol, wherein the first client device and the second client device identify a forward path or a reverse path of the session.
9. The method of any of clauses 1-8, wherein selecting the second router of the network as the backup router for the first router further comprises:
   propagating an update to routing and forwarding information amongst routers of a same cluster, wherein the update comprises an address and a port of the second router for replacing an address and a port of the first router in any entry corresponding to a route via the first router or for adding an entry corresponding to a new route via the second router.
10. The method of any of clauses 1-9, wherein selecting the second router of the network as the backup router for the first router further comprises:
   to each peer router in the forward path or the reverse path of the session, communicate message data instructing a routing component of that peer router to update routing and forwarding information, wherein updating the routing and forwarding information causes a redirection of a packet flow of the session, by the routing component, to the second router.
11. A network device operating as a session controller for a network comprising:
   processing circuitry; and
   a memory comprising instructions that, when executed by the processing circuitry, cause the processing circuitry to:
      receive, from a first router of a plurality of routers of the network, session state information for a session between a first client device and a second client device, wherein the session state information comprises metadata specifying attributes of the session;
      determine the first router has failed;
      in response to determining the first router has failed, select a second router of the network as a backup router for the first router;
      synchronize the session state information for the session to the second router.
12. The network device of clause 11, wherein the session state information includes a session identifier corresponding to a 5-tuple dataset comprising an address and a port of a previous network device, an address and a port of a next network device, and a routing protocol.
13. The network device of clause 11 or 12, wherein to select the second router of the network as the backup router for the first router, the processing circuitry is further configured to:
   pre-configure the second router as the backup router for the first router prior to determining the first router has failed; and
   in response to determining the first router has failed, trigger routing updates to redirect traffic to the second router.
14. The network device of clause 13, wherein to pre-configure the second router as the backup router, the processing circuitry is further configured to:
   synchronize the session state information to the backup router prior to determining the first router has failed.
15. The network device of any of clauses 11-14, wherein to select the second router of the network as the backup router for the first router, the processing circuitry is further configured to:
   in response to determining the first router has failed, synchronize the session state information to the second router; and
   trigger routing updates to redirect traffic to the second router.
16. The network device of any of clauses 11-15, wherein the processing circuitry is further configured to:
   to at least one peer router of at least one of the first router or the second router, communicate message data indicative of an alternative route, via the second router, in the forward path or the reverse path between the first client device and the second client device.
17. A computer readable medium comprising program instructions configured to cause processing circuitry to:
   receive, from a first router of a plurality of routers of the network, session state information for a session between a first client device and a second client device, wherein the session state information comprises metadata specifying attributes of the session; determine the first router has failed;
   in response to determining the first router has failed, select a second router of the network as a backup router for the first router; and
   synchronize the session state information for the session to the second router.
18. The computer readable medium of clause 17 further comprising instructions configured to cause the processing circuitry to:
   in response to determining the first router has failed, synchronize the session state information to the second router; and
   trigger routing updates to redirect traffic to the second router.
19. The computer readable medium of clause 17 or 18, wherein the session state information includes a session identifier corresponding to a 5-tuple dataset comprising an address and a port of a previous network device, an address and a port of a next network device, and a routing protocol.
20. The computer readable medium of any of clauses 17-19, further comprising instructions configured to cause the processing circuitry to:
   pre-configure the second router as the backup router for the first router prior to determining the first router has failed;
   synchronize the session state information to the backup router prior to determining the first router has failed; and
   in response to determining the first router has failed, trigger routing updates to redirect traffic to the second router.

## Claims

1. A method performed on processing circuitry of a session controller comprising:
receiving, from a first router of a plurality of routers of a network, session state information for a session between a first client device and a second client device, wherein the session state information comprises metadata specifying attributes of the session;
determining the first router has failed;
in response to determining the first router has failed, selecting a second router of the network as a backup router for the first router; and
synchronizing the session state information for the session to the second router.

2. The method of claim 1, wherein the session state information includes a session identifier.

3. The method of claim 2, wherein the session identifier corresponds to a 5-tuple dataset comprising an address and a port of a previous network device, an address and a port of a next network device, and a routing protocol.

4. The method of any of claims 1-3, wherein selecting the second router of the network as the backup router for the first router further comprises:
pre-configuring the second router as the backup router for the first router prior to determining the first router has failed; and
in response to determining the first router has failed, triggering routing updates to redirect traffic to the second router.

5. The method of claim 4, wherein pre-configuring the second router as the backup router further comprises:
synchronizing the session state information to the backup router prior to determining the first router has failed.

6. The method of any of claims 1-5, wherein selecting the second router of the network as the backup router for the first router further comprises:
in response to determining the first router has failed, synchronizing the session state information to the second router; and
triggering routing updates to redirect traffic to the second router.

7. The method of any of claims 1-6, wherein selecting the second router of the network as the backup router for the first router further comprises:
selecting the second router as the backup for the first router based on a number of metrics.

8. The method of any of claims 1-7, wherein one or more of the attributes of the metadata comprise an address and a port of the first client device, an address and a port of the second client device, and a routing protocol, wherein the first client device and the second client device identify a forward path or a reverse path of the session.

9. The method of any of claims 1-8, wherein selecting the second router of the network as the backup router for the first router further comprises:
propagating an update to routing and forwarding information amongst routers of a same cluster, wherein the update comprises an address and a port of the second router for replacing an address and a port of the first router in any entry corresponding to a route via the first router or for adding an entry corresponding to a new route via the second router.

10. The method of any of claims 1-9, wherein selecting the second router of the network as the backup router for the first router further comprises:
to each peer router in the forward path of the session, communicating message data instructing a routing component of that peer router to update routing and forwarding information, wherein updating the routing and forwarding information causes a redirection of a packet flow of the session, by the routing component, to the second router.

11. The method of any of claims 1-9, wherein selecting the second router of the network as the backup router for the first router further comprises:
to each peer router in the reverse path of the session, communicating message data instructing a routing component of that peer router to update routing and forwarding information, wherein updating the routing and forwarding information causes a redirection of a packet flow of the session, by the routing component, to the second router.

12. The method of any of claims 1-11 further comprising:
to at least one peer router of the first router, communicating message data indicative of an alternative route, via the second router, in the forward path or the reverse path between the first client device and the second client device.

13. The method of any of claims 1-11 further comprising:
to at least one peer router of the second router, communicating message data indicative of an alternative route, via the second router, in the forward path or the reverse path between the first client device and the second client device.

14. A computing device comprising means for performing the method recited by any of claims 1-13.

15. A computer readable medium encoded with instructions for causing one or more programmable processors to perform the method recited by any of claims 1-13.
